# EUROPÄISCHE PATENTANMELDUNG

(11) **EP 4 074 178 A1**
(43) Veröffentlichungstag der Anmeldung: **19.10.2022**
(21) Anmeldenummer: 22167364.3
(22) Anmeldetag: 08.04.2022
(51) Int. Cl.: A01N 59/06, A01N 59/00, A01N 25/08, A01N 25/24, A01P 3/00, A01P 17/00, A01N 61/00, A01N 3/00

(54) **VERWENDUNG EINES WECHSELLAGERUNGSTONMINERALS ALS MINERALISCHES BESCHICHTUNGSMITTEL UND/ODER HAFTMITTEL FÜR PFLANZEN**

(30) Priorität: 13.04.2021 DE 102021109150
(71) Anmelder: FIM Biotech GmbH, 10117 Berlin (DE); Bönnemann, Martin, 59457 Werl (DE)
(72) Erfinder: Bönnemann, Martin, 59457 Werl (DE)
(74) Vertreter: Maikowski & Ninnemann Patentanwälte Partnerschaft mbB

(57) **Zusammenfassung**

Die vorliegende Erfindung betrifft die Verwendung von mindestens einem Wechsellagerungstonmineral als mineralisches Beschichtungsmittel und/oder Haftmittel für Pflanzen zum Pflanzenschutz.

## Beschreibung

Die vorliegende Erfindung betrifft die Verwendung eines Wechsellagerungstonminerals als mineralisches Beschichtungsmittel und/oder Haftmittel für Pflanzen zum Pflanzenschutz.

### Beschreibung

Effektiver und nachhaltiger Pflanzenschutz stellt eine große Herausforderung angesichts des Klimawandels und des damit einhergehenden Artensterbens dar. Einerseits ist insbesondere für die Gewährleistung der Nahrungsgrundlage unerlässlich, Kulturpflanzen und Forstpflanzen vor Schädlingsbefall zu schützen. Andererseits wird durch die Verwendung von synthetischen Pflanzenschutzmitteln das Insektensterben beschleunigt.

Es ist daher wünschenswert, ein Mittel zur Verfügung zu stellen, welches effektiv zum Pflanzenschutz beiträgt, gleichzeitig aber nicht die negativen Effekte von synthetischen Pflanzenschutzmitteln aufweist. Entsprechend wäre es wünschenswert, ein natürlich vorkommendes Pflanzenschutzmittel zu verwenden.

Eine mögliche Alternative zu synthetischen Pflanzenschutzmitteln stellen Tonminerale aus natürlichen Vorkommen dar. So wird z.B. das Tonmineral Kaolin beschrieben, welches auf die Pflanzen aufgebracht wird und dort als physikalische Barriere, als Repellent oder auf die Verhaltensweise von Schadinsekten einwirkt, ohne diese abzutöten.

Bar-Jospeh und Frenkel (Crop protection, 1983, 2, 371-374) führten Untersuchungen zur Wirkung von Kaolin und Bentonit gegen Zitrusgewächse befallende Blattläuse durch. Suspensionen mit Kaolin und Bentonit wurden hierzu auf Zitruspflanzen gesprüht und der Befall mit Blattläusen untersucht. Dabei zeigte sich eine gute Wirkung von Kaolin, jedoch nicht von Bentonit.

Als nachteilig hat sich bei der Verwendung von Kaolin jedoch dessen geringe Haftung auf den Pflanzen erwiesen, so dass die vorteilhafte Wirksamkeit des Kaolins nur zeitlich begrenzt ist. Weiterhin ist Kaolin kaum quellfähig und kann deshalb die Pflanzenoberflächen nicht abtrocknen (Sporen, Pilzbefall). Dies bedingt, dass Kaolin keine anderen Substanzen, wie z.B. Pestizide, Blattdünger oder andere Wirkstoffe binden kann, und somit diese auch nicht auf der Pflanzenoberfläche bereitstellen kann. Auch weist Kaolin keinen Quartzanteil auf.

Die Verwendung von Kaolin in Kombination mit Zellulosederivaten zur Ausbildung von Filmen auf hydrophoben und hydrophilen pflanzlichen Oberflächen wird in der US 2007/0037712 A1 beschrieben.

Das Gerüstsiliokat Zeolith oder das Schichtsilikat Montmorillonit werden in der JP 2004315407 A 1 zum Schutz von Feldfrüchten verwendet.

Es war eine Aufgabe der vorliegenden Erfindung ein Tonmineral zur Verfügung zu stellen, welches die Nachteile aus dem Stand der Technik überkommt. Insbesondere ist es wünschenswert ein Tonmineral mit verbesserter Haftung auf Pflanzen zur Verfügung zu stellen, wobei gleichzeitig das Erscheinungsbild der Pflanzen nicht unnatürlich verändert wird und keine (unästhetischen) sichtbaren Belage auf der Pflanze ausbilden.

Diese Aufgabe wird mit der Verwendung eines Wechsellagerungstonminerals gemäß Anspruch 1 gelöst.

Entsprechend wird ein Wechsellagerungstonmineral als mineralisches Beschichtungsmittel und/oder Haftmittel für Pflanzen bereitgestellt, welches dem Pflanzenschutz dient.

Es wird somit ein natürlich vorkommendes Pflanzenschutzmittel bereitgestellt, welches in der Lage ist, auf Pflanzenteilen eine Beschichtung auszubilden und somit die Pflanze vor äußeren schädlichen Einflüssen zu schützen. Auch weist das Wechsellagerungstonmineral eine haftende Wirkung auf, wodurch die Bereitstellung von an das Wechsellagerungstonmineral gebundenen Wirkstoffen, wie Pestiziden oder Insektiziden, auf der Pflanzenoberfläche ermöglicht wird.

Das Wechsellagerungstonmineral wird zur Beschichtung der oberirdischen Pflanzenteile, wie Blätter, Früchten verwendet, aber auch eine Beschichtung der Pflanzenwurzel ist möglich. Eine Beschichtung von Samen ist ebenfalls möglich. In diesem Fall wird das Wechsellagerungstonmineral zum Beizen von Samen verwendet.

Das Wechsellagerungstonmineral umfasst bevorzugt ein Wechsellagerungstonmineral aus Montmorillonit und Illit/Muskovit.

Die vorliegend verwendete mineralische Verbindung weist aufgrund ihrer einzigartigen mineralogischen Zusammensetzung besondere Eigenschaften auf, die eine besonders gute Haftung auf der Pflanze ermöglichen. So weist das vorliegend zum Einsatz kommende Wechsellagerungstonmineral, insbesondere bei Verwendung des Wechsellagerungstonmineral in einer Partikelgröße zwischen1 und 70 µm, bevorzugt zwischen 2 und 60 µm, insbesondere bevorzugt zwischen 5 und 50, wie z.B. zwischen 7 und 15 µm µm eine sehr gute Haftungsfähigkeit auf den behandelten Pflanzenteilen auf. Das Wechsellagerungstonmineral wird gezielt für den Einsatz gegen spezielle Schädlinge (nach Größe) aufbereitet. Der Rapsglanzkäfer hat eine Größe von etwa zwei Millimetern. Hier wird bevorzugt eine Partikelgröße von 1-7 µm eigesetzt. Der Maikäfer hat eine Größe von bis 3 cm. Hier kommt das Tonmineral mit einer Größe von bis 63 µm bzw. Mischungen von verschiedenen Kornfraktionen zum Einsatz, ggf. ergänzt mit Quarzmehl oder Feinsand um die Wirksamkeit zu steigern.

Die Haftung des Wechsellagerungstonminerals ergibt sich aus dem Zusammenspiel verschiedener physikalischer Kräfte während des Auftragens der Suspension als der direkten Haftung Ton/Oberfläche. Die hohe Oberflächenspannung der Suspension Wasser / Wechsellagerungstonmineral wird durch die Abgabe von Ionen aus dem Wechsellagerungstonmineral weiter verstärkt. Die damit verbundene Verstärkung der Beweglichkeit (der Suspension) wird durch die thixotrope Eigenschaft der Suspension mehr als aufgehoben. Durch Verdunstung von Wasser wird die Größe der Teilchen verringert, diese sehr kleinen Tröpfchen können sich damit direkt an der Oberfläche der anlagern.

Das vorliegend verwendete Wechsellagerungstonmineral bildet eine Verbindung mit der epicuticularen Wachsschicht der Blätter. Die Verbindung kann sowohl eine formschlüssige als auch eine chemische sein. Die Wachse enthalten Substanzen mit Carbonylgruppen, die mit dem Ton durch einen Ligandenaustausch eine Verbindung eingehen können. Dies ist möglicherweise die Erklärung für die gute Anhaftung des Tonminerals auf der Blattoberfläche, sodass der Ton von der Blattoberfläche nicht so schnell entfernt werden kann. Das Tonmineral unterstützt die Schutzfunktion der Wachse insbesondere vor UV-Strahlung und vor Mikroorganismen. Eine ähnlicher Bindungs- bzw. Haftmechanismus wird für die Haftung des Wechsellagerungstonminerals auf Früchten angenommen.

Das vorliegende mineralische Beschichtungsmittel liefert einen neuen Ansatz im Pflanzenschutz. Die Pflanze wird gegen Schädlinge durch Beschichtung mit dem Tonmineral auf eine mechanische Weise geschützt. Ferner werden die Schädlinge in ihrer natürlichen Verhaltensweise gehindert bzw. behindert. So wird die Pflanze aufgrund des auf den Blättern klebenden Tonminerals für Schädlinge ungenießbar und damit unattraktiv. Diese Wirkung des Tonminerals gegen Schädlinge, insbesondere Fraßschädlinge wird durch die Zugabe von Quarzmehl oder Sand verstärkt. Auch bewirkt die mineralische Beschichtung ein Austrocknen und Verkleben von Insekteneiern, so dass die Fortpflanzung der Schadinsekten beeinträchtigt wird. Überraschenderweise hat sich auch gezeigt, dass bei einer geeigneten Auftragung das Beschichtungsmittel mit dem bloßen Auge (fast) nicht für das menschliche Auge erkennbar ist, so dass keine ästhetische Beeinträchtigung vorliegt.

Das Wechsellagerungstonmineral wirkt als Repellent und physikalische Barriere. Es tötet die Schadinsekten nicht ab, behindert diese jedoch bei ihren natürlichen Verhaltensweisen. Dies wurde durch eine Bienenstudie mit dem vorliegenden Wechsellagerungstonmineral im Freiland an Phacelia nachgewiesen, bei der keine negativen Effekte auf die Bienenaktivität festgestellt wurden Aufgrund der rein mechanischen Wirkung des Wechsellagerungstonminerals auf die Pflanzenschädlinge ist eine Resistenzbildung nicht zu erwarten.

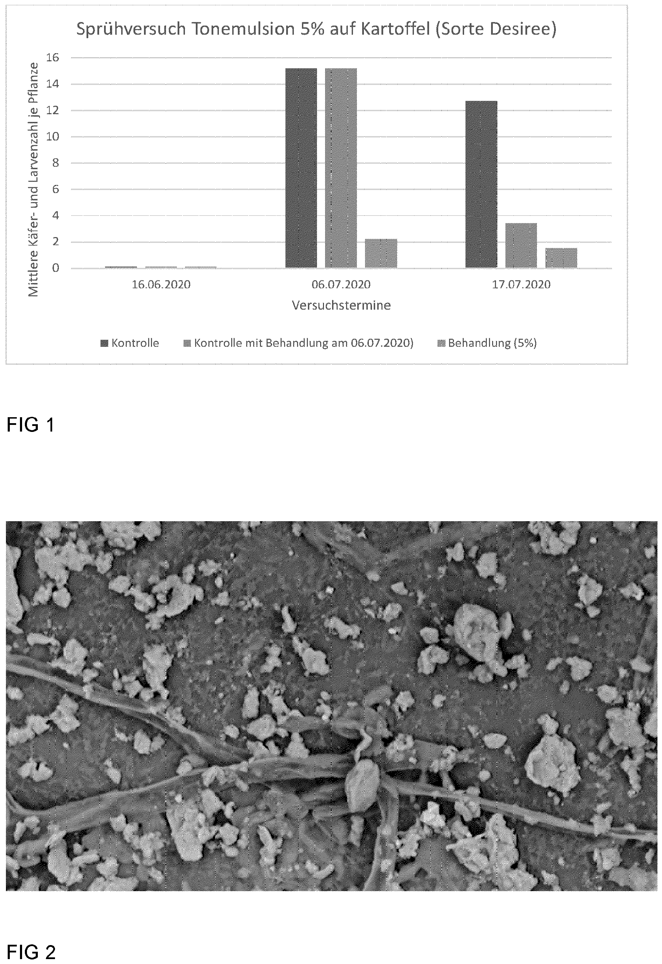

Auch hat sich gezeigt, dass in dem auf die Pflanzenteile aufgetragenen Wechsellagerungstonmineral der Abstand zwischen den einzelnen Tonpartikeln auf der Blattoberfläche ausreichend groß ist, so dass Tageslicht auf die Pflanzenoberfläche gelangen kann. Die Pflanze wird bei der Photosynthese nicht (wesentlich) beeinträchtigt (siehe hierzu auch Figur 2).

Für die Anwendung des Wechsellagerungstonminerals zur Beschichtung von Pflanzenwurzeln wird dieses in eine Nährflüssigkeit bzw. einen Flüssigdünger eingebracht. Die einzelnen Partikel des Wechsellagerungstonminerals quellen und binden die Nährstoffe in den Zwischenschichten, wie auch weiter unten ausführlicher erläutert wird. Die Pflanze/ Setzling bzw. dessen Wurzeln werden in die Suspension eingetaucht und dann eingepflanzt. Vorteil dieses Verfahrens ist, dass die Nährstoffe genau dort gebunden und langsam abgegeben werden wo sie benötigt werden, nämlich direkt an den Wurzeln. Ergebnis dieser Anwendung sind vitalere / wüchsigere Pflanzen mit höheren Erträge z.B. bei Erdbeerpflanzen und Salaten, betrifft grundsätzlich aber alle Pflanzen. Diese Art der Wurzelbeschichtung fördert zudem die Bildung eines Ton-Humus-Komplexes.

Das vorliegend als Beschichtungsmittel verwendete Wechsellagerungstonmineral setzt sich aus quellfähigen und nichtquellfähigen Schichten in unregelmäßiger Folge zusammen, die ggf. noch anderen Minerale wie Silikate, Oxide, Carbonate, Sulfide und Sulfate enthalten. Sowohl in den quellfähigen Zwischenschichten als auch an den Außenkanten kann das Wechsellagerungstonmineral Montmorillonit weitere Wirkstoffe "speichern / transportieren" und an wieder die Pflanze abgeben z.B. Blattdünger.

Mixedlayer können strukturell aus sehr unterschiedlichen Wechsellagerungsschichten bestehen z.B. Kaolinit/Smectit, Chlorit/Vermikulit, Glimmer/Vermikulit oder sehr häufig Wechsellagerung von Illit/Smectit oder Illit/Montmorillonit. Dadurch sind vielfältigere Austauschreaktionen von Kationen und Anionen möglich als bei reinen Montmorilloniten.

Besonders bevorzugt kommt ein Wechsellagerungstonmineral aus Montmorillonit und Illit/Muskovit zum Einsatz, wobei in diesem Wechsellagerungsmineral Montmorillonit und Illit/Muskovit in einem Verhältnis von 60:40 bis 40:60 enthalten sein können, wobei ein Verhältnis von 50:50 bevorzugt ist, d.h. Montmorillonit und Illit/Muskovit zu jeweils 50 Gew% enthalten sein können.

Zusätzlich zu den Mineralien Montmorillonit und Illit/Muskovit kann die bevorzugt verwendete mineralische Verbindung auch Anteile von anderen Tonmineralien, wie Kaolinite und Chlorite, Carbonate, Sulfide, Oxide und Sulfate aufweisen.

In einer besonders bevorzugten Ausführungsform umfasst das vorliegend verwendete Wechsellagerungstonmineral durchschnittlich 50-60 Gew%, bevorzugt 55 Gew% Montmorillonit-Muskovit-Wechsellagerung, 15-25 Gew%, bevorzugt 20 Gew % Illit, 5-9 Gew%, bevorzugt 5 Gew% Kaolinit/Chlorit, 10-20 Gew%, bevorzugt 15 Gew% Quarz, 1-2 Gew%, bevorzugt 1 Gew% Calcit, 0,9-1,5, bevorzugt 1 Gew% Dolomit, 0,9-1,9 Gew%, bevorzugt 1 Gew% Feldspat, 0,9 - 1,0 Gew%, bevorzugt 1 Gew% Pyrit und 0,6-1,0 Gew%, bevorzugt 1 Gew% Gips.

Die chemische Zusammensetzung der Hauptelemente kann in Gew% wie folgt angegeben werden: SiO₂ 58,9; TiO₂ 0,9; Al₂O₃ 17,9; Fe₂O₃ 6,3; MgO 2,0; CaO 0,3; Na₂O 1,1; K₂O 3,0; P₂O₅ 0,1; Sonstige 9,5.

Die bevorzugt verwendete mineralische Verbindung weist eine innere (BET)-Oberfläche von 50 -100 m²/g, bevorzugt 55 - 65 m²/g, insbesondere bevorzugt von 60 m²/g auf. Die innere Oberfläche der bevorzugt verwendeten mineralischen Verbindung ist somit z.B. im Vergleich zu den hochquellfähigen Montmorilloniten relativ gering.

Die mittlere Teilchengröße des bevorzugt verwendeten mineralischen Beschichtungsmittels kann in einem Bereich von 1 bis 70 µm, bevorzugt von 2 bis 60 µm, insbesondere bevorzugt von 5 bis 50 µm, noch bevorzugter von 7 bis 40 µm liegen. Eine bevorzugte Partikelgröße liegt z.B. zwischen 2 und 15 µm, bevorzugt zwischen 2 und 10 µm. Das verwendete mineralische Beschichtungsmittel kann auch aus Mischungen mit verschiedenen Partikelgrößen verwendet werden. So kann eine Mischung Partikel mit einer Größe von 1-2 µm, 5-7 µm oder 10-15 µm enthalten. Beispielsweise kann eine Mischung 50Gew% an Partikeln mit einer Größe von 1-2 µm, 25 Gew% an Partikeln mit einer Größe von 5-7 µm, 25 Gew% an Partikeln mit einer Größe von 10-15 µm aufweisen. So kann eine Mischung 50 Gew% an Partikeln mit einer Größe von 2 µm, 25 Gew% an Partikeln mit einer Größe von 7 µm, 25 Gew% an Partikeln mit einer Größe von 5 µm aufweisen.

Das bevorzugt verwendete Wechsellagerungstonmineral wird aus den in Deutschland in Mecklenburg-Vorpommern, genauer in der Nähe von Friedland im östlichen Teil der Mecklenburgischen Seenplatte, vorhandenen Tonvorkommen isoliert und aufbereitet.

Das bevorzugt verwendete Wechsellagerungstonmineral weist, wie bereits oben erwähnt, einzigartige Eigenschaften auf, in denen es sich von anderen mineralischen Matrizen wie Bentonit oder Montmorillonit wesentlich unterscheidet. Das vorliegend verwendete Wechsellagerungstonmineral enthält somit kein Bentonit.

So ist die vorliegend verwendete mineralische Verbindung nicht nur in der Lage, Kationen in den vorhandenen Montmorillonitschichten auszutauschen, sondern auch Anionen zu binden. Der Wirkmechanismus der vorliegend zum Einsatz kommenden mineralischen Verbindung ist daher ein anderer als bei Bentoniten. So werden z.B. anionische Stoffe besonders gut an den Bruchkanten der in der verwendeten mineralischen Verbindung enthaltenen Illite/Muskovite locker gebunden. Ursache dafür sind fehlende bzw. herausgeschlagene Kaliumionen, die im Mineralverbund für einen Ladungsausgleich sorgen. So entstehen positive Ladungen, an denen Anionen locker gebunden werden können. Da bioaktive Anionen eine relativ hohe Molekularmasse und damit Durchmesser aufweisen, sind die an den Bruchkanten entstandenen Vertiefungen nicht groß genug, um eine feste Bindung zu realisieren. Dies gelingt nur mit kleineren Molekülen, wie die sehr hohe Adsorptionskraft für spezielle Anionen beweist.

Wie bereits oben erwähnt, können dem Wechsellagerungstonmineral weitere Stoffe zugegeben werden, wie Düngemittel, wie Blattdünger, Vergrämungsmittel, Geschmackstoffe, wie Bitterstoffe. Das Wechsellagerungstonmineral dient in diesem Fall als Trägersubstanz für diese Substanzen. Das vorliegend verwendete Wechsellagerungstonmineral enthält jedoch keine Zellulose oder ähnliches.

Das Wechsellagerungstonmineral wird bevorzugt in Form einer Suspension auf die Pflanze aufgebracht. Eine derartige Suspension kann 1 bis 20 Gew%, bevorzugt 4 bis 15 Gew%, insbesondere bevorzugt 5 bis 10 Gew% des mineralischen Beschichtungsmittels enthalten. Die mineralhaltige Suspension wird bevorzugt auf die Pflanze gesprüht. Dichte und Größe der Tropfen wird von der eingesetzten Applikationstechnik bestimmt. Im Falle des Besprühens lagert sich die mineralische Verbindung in Form von feinen Tröpfchen auf der Pflanze ab, so dass es nicht zur Ausbildung einer lückenlosen, durchgängigen filmartigen Beschichtung kommt, sondern die Beschichtung vielmehr aus zahlreichen feinen Tröpfchen besteht.

Ein geeignetes Suspensionsmittel ist Wasser, welches optional mit Additiven versehen ist. Geeignete Additive sind Tenside, wie Tween, oder andere Haftungsmittel.

Es ist aber auch möglich, das Wechsellagerungstonmineral in Form eines trockenen Pulvers auf die betreffenden Pflanzenteile mittels Bestäuben oder Pudern aufzubringen.

Das vorliegend als mineralisches Beschichtungsmittel verwendete Wechsellagerungstonmineral kann demnach als Pflanzenschutzmittel, insbesondere zur Abwehr und Vergrämung von Blattschädlingen, zur Abwehr von Wildverbiss, als Fungizid zur Abwehr von Pilzerkrankungen, als Insektizid zur Abwehr von Schadinsekten, als Repellent und/oder als Sonnenschutz und Verdunstungsschutz verwendet werden.

Für eine hohe Wirksamkeit gegen Wildverbiss ist es vorteilhaft, wenn dem mineralischen Wechsellagerungstonmineral Bitterstoffe oder andere Geschmackstoffe wie Zitronensäure, Kapsaisin zugegeben werden.

Da die Partikel des Tonminerals die Feuchtigkeit auf den Pflanzenblättern binden, wird Entwicklung und Wachstum von Sporen und Pilzen unterbunden. Diese Eigenschaften des Tonminerals ermöglichen eine Verwendung zur Abwehr von Pilzerkrankungen.

Es zeigt u.a. Wirkung gegen Gespinste der Eichenprozessionsspinner. Das Tonmineral führt zur einer Verklebung der Brennhaare. Durch gezieltes Besprühen kann die Mobilität von Fluginsekten (Heuschrecken) stark eingeschränkt werden.

In einer weiteren Ausführungsform kann das mineralische Beschichtungsmittels als Repellent, Sonnenschutz und Antiverdunstungsmittel verwendet werden. Die Pflanze schützt sich gegen Sonne durch Aufrollen der Blätter. Die kleinere Blattoberfläche verdunstet weniger Wasser. Das mineralische Beschichtungsmaterial wirkt wie eine Sonnencreme gegen Verbrennung und Austrocknung (Problem z.B. bei der Kartoffelpflanze).

Die vorliegende Erfindung wird anhand der folgenden Ausführungsbeispiele unter Bezugnahme auf die Figuren näher erläutert. Es zeigen:
- Figur 1: ein Diagramm zum Nachweis der Wirksamkeit des erfindungsgemäßen Beschichtungsmaterials;
- Figur 2: eine mikroskopische Aufnahme des auf ein Pflanzenblatt aufgebrachten Wechsellagerungstonminerals.

### Wechsellagerungstonmineral

Das verwendete Friedland-Wechsellagerungstonmineral weist folgende Charakteristika auf.

Die Korngrößenverteilung (Schlämmanalyse, DIN 18123) beträgt < 2,0 µm 72 Masse%, 2,0 - 6,3 µm 10-15 Masse%, 6,3-20 µm 8-12 Masse%, 20-63 µm 1 Masse%, < 63µm 0,2 Masse%.

Friedland-Minerale weisen ein Gesamtanteil an Tonmineralien zwischen 75 bis 78% auf. Dabei sind 44 Masse% Wechsellagerung (Muskovit-Montmorillonit-Mixed-Layer-Mineral), 16 Masse% Muskovit, 15 Masse% Kaolinit/Chlorit, 1 Masse% Glaukonit, 20 Masse% Quarz, 5 Masse% Feldspat, 2 Masse% Karbonate und 1 Masse% Pyrit.

Die chemische Analyse ergibt folgende Zusammensetzung: 58,98% SiO₂, 0,99% TiO₂, 19,47% Al₂O₃, 6,89% Fe₂O₃, 0,023% MnO, 2,05% MgO, 0,49% CaO, 0,89% Na₂O, 3,07% K₂O und < 0,01% F.

Die Schüttdichte beträgt 0,75 t/m³, die spezifische Oberfläche 170 m²/g, der pH-Wert 8,3, die Feuchtigkeit ca. 5%, die H₂O-Absorption 150% Enslin, der Gehalt an Dioxine bei 0,2 ng/kg, und Kationen-Austauschkapazität 50-60 mval/100g.

### Anwendungsversuche an Kulturgewächsen

### a) Kartoffelpflanzen

Die Ergebnisse der Anwendungsversuche sind im Diagramm der Figur 1 zusammengefasst. Figur 2 zeigt eine mikroskopische Aufnahme des auf die Blätter aufgebrachten Wechsellagerungstonminerals.

Die Kartoffelpflanzen wurden in eine Kontrollgruppe und eine Versuchsgruppe aufgeteilt. Vor der ersten Anwendung des Beschichtungsmittels am 16.06.2020 zeigten die Kartoffelpflanzen einen sehr leichten Befall an Raupen (1 Raupe auf 10 Pflanzen).

Nach Aufsprühen des Tonminerals auf die Pflanzen der Versuchsgruppe erfolgte eine erste Kontrolle am 6. Juli 2020. Die Kontrollgruppe zeigte einen starken Befall von 10-20 Larven pro Pflanze, während in der Versuchsgruppe der Befall sehr gering ausfiel.

In der Folge wurden 50% der Versuchsgruppe mit Raupenbefall mit dem Tonmineral besprüht. Nach 24 Stunden waren in dieser Gruppe keine Käfer zu sehen, die Raupen zeigten eine reduzierte Mobilität. Nach weiteren 5 Tagen waren keine Käfer und keine neuen Eier nachweisbar. Es hatten sich keine neuen Raupen entwickelt, es waren lediglich nur noch wenige große/alte Raupen verblieben.

Eine zweite Kontrolle erfolgte am 17.07.2020. In der unbehandelten Kontrollgruppe zeigte sich ein früheres Absterben des Blattwerkes und weiterhin Befall mit Käferlarven. In der behandelten Versuchsgruppe waren die Blätter länger intakt, zeigten wenig Fraßstellen und sehr wenige Larven.

Fazit: Die Versuchsgruppe zeigte gegenüber der Kontrolle einen deutlichen Vorteil. An den besprühten Pflanzen ist keine Eiablage erkennbar. Zwar verbleiben große Larven an den besprühten Pflanzen (Larven können sich nicht wegbewegen), jedoch wachsen keine neuen Larven nach.

### b) Ziergehölz

Ziergehölz zeigte einen starken Befall mit echtem Mehltau. 25 Tage nach Behandlung mit 5% Tonlösung sind gesunde Blätter nachgewachsen.

### c) Effekt auf Honigbienen

Ziel dieser Studie war es, die möglichen Nebenwirkungen von des Wechsellagerungstonminerals (Prüfsubstanz, 15 µm) auf Honigbienen an blühenden Phacelia zu untersuchen. Flugaktivität und Sterblichkeit von Honigbienen sowie die Entwicklung des Bienenvolkes wurden kurz vor und bis zu 28 Tage nach der Anwendung der Prüfsubstanz auf blühenden Phacelia aufgezeichnet. Die Ergebnisse der Studie deuten darauf hin, dass die Prüfsubstanz keine negativen Auswirkungen auf Honigbienen hat.

### Aktivität bei der Futtersuche;

Die Ergebnisse der Bienen bei der Futtersuche ergaben keine Unterschiede, die auf eine negative Wirkung des Wechsellagerungstonminerals auf die Bienenaktivität schließen lassen. Auf dem behandelten Feld wurde am Tag der Ausbringung ein Maximum an Fraßaktivität beobachtet, auf dem unbehandelten Feld einen Tag später. Auf beiden Feldern wurde ein Rückgang der Bienen bei der Futtersuche beobachtet, was darauf schließen lässt, dass die Tageszeit der Hauptfaktor ist. Im weiteren Verlauf der Studie wurde ein Rückgang der Bienen bei der Futtersuche beobachtet, als die Blütezeit der Phacelia zu Ende ging. Bei den Bewertungen 3, 5 und 6 Tagen wurde auf dem unbehandelten Feld eine geringere Futtersuche festgestellt, was darauf zurückzuführen ist, dass die Bienen in der Nähe blühender Lindenbäume nach Nahrung suchten. Aufgrund des regnerischen Wetters wurde bei 7 Tagen keine Flugaktivität festgestellt.

### Sterblichkeit und Verhalten:

Es wurden keine relevanten Unterschiede in der Sterblichkeit von Arbeitsbienen zwischen behandelten und unbehandelten Feldern festgestellt. Obwohl es große Unterschiede zwischen den Völkern gibt, überstieg die Sterblichkeit kaum 100 Arbeitsbienen pro Volk, was für die natürliche Bienensterblichkeit nicht ungewöhnlich ist. Zwischen 7 und 28 Tagen wurden Wespen und Ameisen beobachtet, die sich von toten Bienen ernährten. Zusätzlich zu den Ergebnissen der Mortalitätsuntersuchungen wurden zu keinem Zeitpunkt der Studie Anzeichen von Vergiftungen oder abnormalem Verhalten beobachtet. Die Zahl der in den Fallen gefundenen toten Drohnen oder Puppen war zu gering und wurde daher nicht in das Ergebnis einbezogen.

### Entwicklung der Bienenvölker:

Im Allgemeinen zeigten die Bewertungen der Kolonieentwicklung keine Auswirkungen der Behandlung auf die Entwicklung der Kolonien. Die Ergebnisse zeigen jedoch erhebliche Unterschiede zwischen den Bienenvölkern innerhalb derselben Behandlung. Die Unterschiede bei der Menge an Brut (Eier, Larven und Puppen) und Pollen waren größer als bei der Anzahl der Bienen pro Volk. Zwischen 9 Tagen und 21 Tagen wurde in den behandelten Völkern mehr Bienenbrut im Vergleich zu den unbehandelten Völkern festgestellt. Dies ist darauf zurückzuführen, dass auf dem unbehandelten Feld weniger Bienenvölker queenright waren. Alle Bienenvölker waren queenright, bevor sie auf die Versuchsfelder umgesiedelt wurden, dennoch wurden in jeder Behandlung zwei Bienenvölker ohne Königin gefunden. Sobald das Fehlen einer Königin festgestellt wurde, wurden neue Königinnen in den Bienenstock eingesetzt, was jedoch nicht immer erfolgreich war. Die Akzeptanz neuer Königinnen während des Hochsommers ist relativ unsicher. Es wird vermutet, dass der Verlust von Königinnen in einigen Völkern in beiden Behandlungen der Haupteinflussfaktor für die beobachtete höhere Bienenbrut in behandelten Völkern und für die großen Unterschiede zwischen Völkern derselben Behandlung ist. Da beide Behandlungen betroffen waren, kann geschlussfolgert werden, dass die Anwendung des Wechsellagerungstonminerals keine relevanten Auswirkungen auf die Entwicklung der Bienenvölker hatte.

### Varroa-Befall:

Der Befall mit Varroamilben während des Versuchs war sehr gering, da alle Bienenvölker einen Befall von unter 1 % aufwiesen, was darauf hindeutet, dass die Gesundheit der Bienenvölker zu diesem Zeitpunkt nicht gefährdet war. Der beobachtete Anstieg des Befallsniveaus folgte der natürlichen Populationsdynamik von Varroamilben. Da Varroamilben auf Bienenbrut angewiesen ist, um sich zu vermehren, ist zu vermuten, dass die höhere Menge an Brut, die während des Versuchs in den behandelten Bienenvölkern gefunden wurde, die Haupterklärung für den etwas höheren Befallsgrad in den behandelten Völkern ist.

## Patentansprüche

1. Verwendung von mindestens einem Wechsellagerungstonmineral als mineralisches Beschichtungsmittel und/oder Haftmittel für Pflanzen zum Pflanzenschutz.

2. Verwendung des Wechsellagerungstonminerals nach Anspruch 1, **dadurch gekennzeichnet, dass** das Wechsellagerungstonmineral ein Tonmineral aus Montmorillonit und Illit/Muskovit ist

3. Verwendung des Wechsellagerungstonminerals nach Anspruch 1 oder 2, **dadurch gekennzeichnet, dass** das Wechsellagerungstonmineral die Tonminerale Montmorillonit und Illit/Muskovit in einem Verhältnis von 60:40 bis 40:60 enthält.

4. Verwendung des Wechsellagerungstonminerals nach einem der vorhergehenden Ansprüche, **dadurch gekennzeichnet, dass** weitere Tonminerale wie Kaolinite und Chlorite enthalten sind.

5. Verwendung des Wechsellagerungstonminerals nach einem der vorhergehenden Ansprüche, **dadurch gekennzeichnet, dass** Quarzmehl enthalten ist.

6. Verwendung des Wechsellagerungstonminerals nach einem der vorhergehenden Ansprüche, **dadurch gekennzeichnet, dass** das Wechsellagerungstonmineral folgende Zusammensetzung aufweist: 50-60 Gew% Montmorillonit-Muskovit-WL, 15-25 Gew% Illit/Muskovit, 5-9 Gew% Kaolinit/Chlorit, 10-20 Gew% Quarz, 1-2 Gew% Calcit, 0,9-1,5 Gew% Dolomit, 0,9-1,9 Gew% Feldspat, 0,9-2,0 Gew% Pyrit und 0,6-1,0 Gips Gew%.

7. Verwendung des Wechsellagerungstonminerals nach einem der vorhergehenden Ansprüche, **dadurch gekennzeichnet, dass** die Matrix des Wechsellagerungstonmineral eine BET-Oberfläche von 50 -100 m²/g aufweist.

8. Verwendung des Wechsellagerungstonminerals nach einem der vorhergehenden Ansprüche, **dadurch gekennzeichnet, dass** das Wechsellagerungstonmineral Partikel mit einer mittleren Teilchengröße von 1 bis 70 µm, bevorzugt von 2 bis 60 µm, insbesondere bevorzugt von 5 bis 50 µm, noch bevorzugter von 7 bis 40 µm aufweist.

9. Verwendung des Wechsellagerungstonminerals nach einem der vorhergehenden Ansprüche, **dadurch gekennzeichnet, dass** dem Wechsellagerungstonmineral Blattdünger, Vergrämungsmittel, Geschmackstoffe, wie Bitterstoffe, Zitronensäure, Kapsaisin und weitere Stoffe zugegeben werden.

10. Verwendung des Wechsellagerungstonminerals nach einem der vorhergehenden Ansprüche, **dadurch gekennzeichnet, dass** das Beschichtungsmittel als Suspension auf die Pflanze aufgebracht wird.

11. Verwendung des Wechsellagerungstonminerals nach Anspruch 10 **dadurch gekennzeichnet, dass** die Suspension 1 bis 20 Gew%, bevorzugt 4 bis 15 Gew%, insbesondere bevorzugt 5 bis 10 Gew% des Beschichtungsmittels enthält.

12. Verwendung des Wechsellagerungstonminerals nach einem der Ansprüche 1 bis 9, **dadurch gekennzeichnet, dass** das Beschichtungsmittel als Pulver, insbesondere mittels Bestäuben oder Pudern, auf die Pflanze aufgebracht wird.

13. Verwendung des Wechsellagerungstonminerals nach einem der vorhergehenden Ansprüche zur Abwehr und Vergrämung von Blattschädlingen, zur Abwehr von Wildverbiss, zur Abwehr von Pilzerkrankungen.

14. Verwendung von mindestens einem Wechsellagerungstonmineral nach einem der Ansprüche 1 bis 11 als Sonnenschutz, als Repellent und als Antiverdunstungsmittel.

15. Verwendung von mindestens einem Wechsellagerungstonmineral nach einem der Ansprüche 1 bis 11 zum Beschichten von Samen, insbesondere zum Beizen von Samen.
